# EUROPEAN PATENT SPECIFICATION

(11) **EP 1 413 948 B1**
(45) Date of publication and mention of the grant of the patent: **29.04.2009**
(21) Application number: 03023528.7
(22) Date of filing: 15.10.2003
(51) Int. Cl.: G06F 3/00, H04M 1/247, G06F 3/023

(54) **Portable telephone set, key operation validity/invalidity notification method for use with the portable telephone set and program for the method**
Tragbares Telefon, Verfahren zur Gültigkeits/Ungültigkeitsmeldung von Tastenbetätigungen an einem tragbaren Telefon und Programm für das Verfahren
Téléphone portatif, procédé pour la notification de la validité/invalidité des actionnements de touches d'un téléphone portatif et programme pour ledit procédé

(30) Priority: 23.10.2002 JP 2002307737
(43) Date of publication of application: 28.04.2004
(73) Proprietor: NEC CORPORATION, Tokyo 108-8001, (JP)
(72) Inventor: Uno, Hiroyuki, Minato-ku Tokyo (JP)
(74) Representative: Glawe, Delfs, Moll

(56) References cited:
- EP-A- 0 872 996
- EP-A- 1 128 642
- WO-A-01/45359
- US-A1- 2002 070 923

## Description

### BACKGROUND OF THE INVENTION

### Field of the Invention

The present invention relates to a technique for notifying a user of a portable telephone set of whether a key operation of the portable telephone set is valid or invalid.

### Description of the Related Art

Conventionally, when a portable telephone set is operated, if the operation is an invalid key operation, then usually the operation is ignored. Therefore, the user does not have any measures for clearly finding out that the key operation performed is invalid.

Japanese Patent Laid-Open No. 2002-163063 (hereinafter referred to as patent document 1) discloses, particularly on pages 2 to 5 and in FIGS. 1 to 3, an apparatus wherein a set of light emitting diodes for individually illuminating ten keys and a menu key are disposed on the back side of a key sheet which includes the keys on an operation section thereof such that only those of the light emitting diodes which correspond to those keys which can be depressed validly are lit.

The apparatus can indicate a key or keys which can be depressed validly to a user thereof to provide a guidance for a key operation to the user. The apparatus can thereby assist the user to perform an appropriate operation of the menu key and the ten keys of the operation section and prevent a wrong wasteful operation arising from depression of an invalid key thereby to improve the convenience in use.

With the conventional apparatus which indicates a key operation as described above, since only a light emitting diode or diodes corresponding to a key or keys which can be depressed validly are lit, an error can be prevented. However, when a depressed key is invalid, the apparatus cannot notify the user of the invalidity of the depressed key. Further, although a light emitting diode originally exhibits high power consumption, such light emitting diodes are disposed in a corresponding relationship to the keys, and those light emitting diodes corresponding to all of valid ones of the keys are lit. Besides, depression waiting time, for example, for 15 seconds is provided for the lit light emitting diodes, and if none of the valid keys is depressed within the depression waiting time, then the light emitting diodes are kept to emit light for the period of time. Therefore, the apparatus is disadvantageous in that the power consumption thereof or exhaustion of a battery used is high.

EP-A-0 872 996 discloses a portable telephone set including a call terminal notification means, key inputting means, key input discrimination means, key input validity notification means and key input invalidity notification means.

### Summary of the invention

It is an objection of the invention to provide a portable telephone set, a key operation validity / invalidity notification method for use with the portable telephone set and a program for the method wherein, when depression of a key is performed actually, a notification of whether the depressed key is a valid key or an invalid key can be issued readily without the necessity for special hardware.

This object is solved by the features of claim 1 and / or claim 4.

Further advantageous embodiments are mentioned in the sub claims.

The above and other objects, features and advantages of the present invention will become apparent from the following description and the appended claims, taken in conjunction with the accompanying drawings in which like parts or elements are denoted by like reference symbols.

### BRIEF DESCRIPTION OF THE DRAWINGS

FIG. 1 is a block diagram showing a configuration of a portable telephone set to which the present invention is applied;
FIG. 2 is a flow chart illustrating operation of the portable telephone set of FIG. 1; and
FIGS. 3 and 4 are flow charts illustrating different operation of the portable telephone set of FIG. 1.

### DESCRIPTION OF THE PREFERRED EMBODIMENT

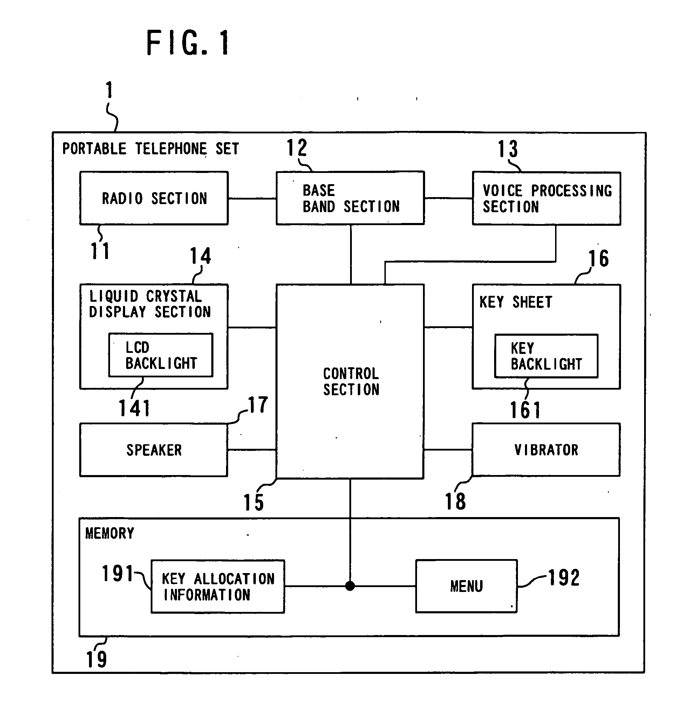

Referring first to FIG. 1, there is shown in block diagram a configuration of a portable telephone set to which the present invention is applied. The portable telephone set 1 shown includes a radio section 11, a base band section 12, a voice processing section 13, a display section 14, a control section 15, a key sheet 16, a speaker 17, a vibrator 18, and a memory 19.

The display section 14 is a liquid crystal display (LCD) unit and includes an LCD backlight 141 for illumination thereof, and the key sheet 16 includes a key backlight 161 for illumination thereof. LEDs (Light Emitting Diodes) are used for the backlights.

The memory 19 stores key allocation information 191 and a menu 192 as well as a program (not shown) to be executed by the control section 15, that is, a program which can be executed by a computer. The menu 192 is a table of functions of the portable telephone set, and every time a valid key is inputted, the control section 15 refers to the menu 192 to update the key allocation information 191. The key allocation information 191 is formed as a list representing whether the individual keys of the key sheet 16 are valid or invalid.

If one of the keys of the key sheet 16 is depressed and a corresponding signal is inputted to the control section 15, then the control section 15 refers to the key allocation information 191 to detect whether the key is valid or invalid. If the inputtedkey is valid, then the control section 15 controls the speaker 17 to generate first beep sound (BEEP#1) and performs a predetermined process. On the other hand, if the inputted key is invalid, then the control section 15 controls the speaker 17 to generate second beep sound (BEEP#2) different from the first beep sound (BEEP#1) and waits until a validkey is inputted.

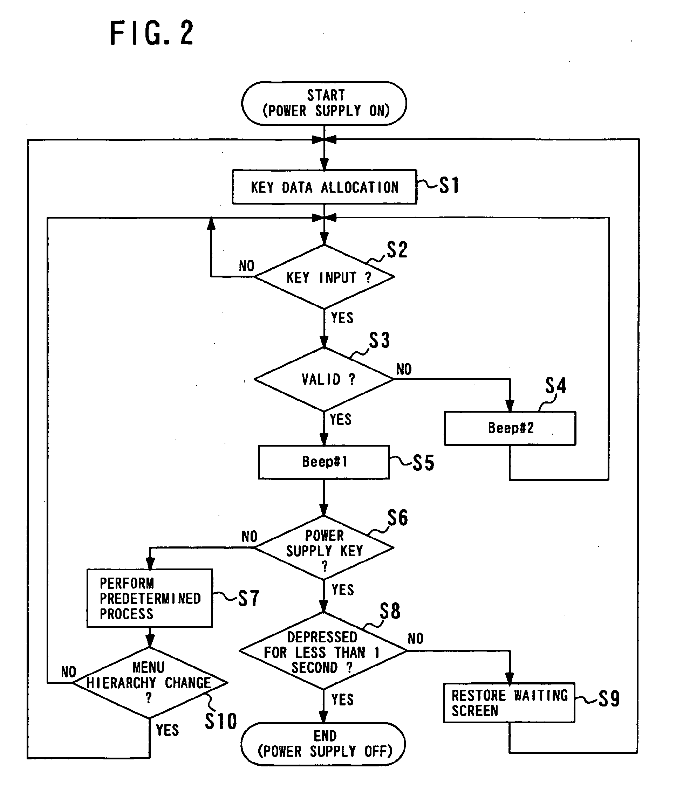

FIG. 2 is a flow chart illustrating operation of the portable telephone set 1 of FIG. 1. Operation of the portable telephone set 1 described above is describedbelowwith reference to FIGS. 1 and 2. It is to be noted that the process illustrated in FIG. 2 is realized by the control section 15 executing the program of the memory 19.

If the power supply to the portable telephone set 1 is turned on, then allocation of keys of an initial menu (waiting screen) is performed automatically (step S1 of FIG. 2). Then, if an input of a key on the key sheet 16 is detected (step S2 of FIG. 2), then the control section 15 refers to the key allocation information 191 to discriminate whether or not the key is valid (step S3 of FIG. 2).

If the inputted key is valid, then the control section 15 controls the speaker 17 to generate the first beep sound (BEEP#1) (step S5 of FIG. 2). Then, if the key is not the power supply key (step S6 of FIG. 2), then the control section 15 performs a predetermined process (step S7 of FIG. 2). Then, if the hierarchy of the menu changes as a result of the process (step S10 of FIG. 2), then the processing returns to step S1 to update the key allocation information 191.

On the other hand, if the inputted key is the power supply key (step S6 of FIG. 2), then the control section 15 performs a different operation depending upon a period of time for which the key is depressed. If the period of time within which the key is depressed is, for example, within one second (step S8 of FIG. 2), then the control section 15 restores the waiting screen (step S9 of FIG. 2) and the processing returns to step S1, but if the period within which the key is depressed is equal to or longer than 1 second (step S8 of FIG. 2), then the control section 15 turns off the power supply and ends the processing.

On the other hand, if the inputted key is valid (step S3 of FIG. 2) , then the control section 15 controls the speaker 17 to generate the second beep sound (BEEP#2) different from the first beep sound (BEEP#1) (step S4 of FIG. 2) and then waits until a valid key operation is inputted.

In this manner, in the portable telephone set 1, if an inputted key is valid, then the first beep sound (BEEP#1) is generated, but if the inputted key is invalid, then the second beep sound (BEEP#2) is generated. Consequently, the user can discriminate readily whether the inputted key is valid or invalid, and accordingly, the portable telephone set can prevent the user from performing a wrong key operation repetitively. In this instance, since the speaker 17 which is a call termination notification element provided in the portable telephone set 1 is used also as a key operation validity/invalidity notification element, there is no necessity to use special hardware for notification of whether a key operation is valid or invalid.

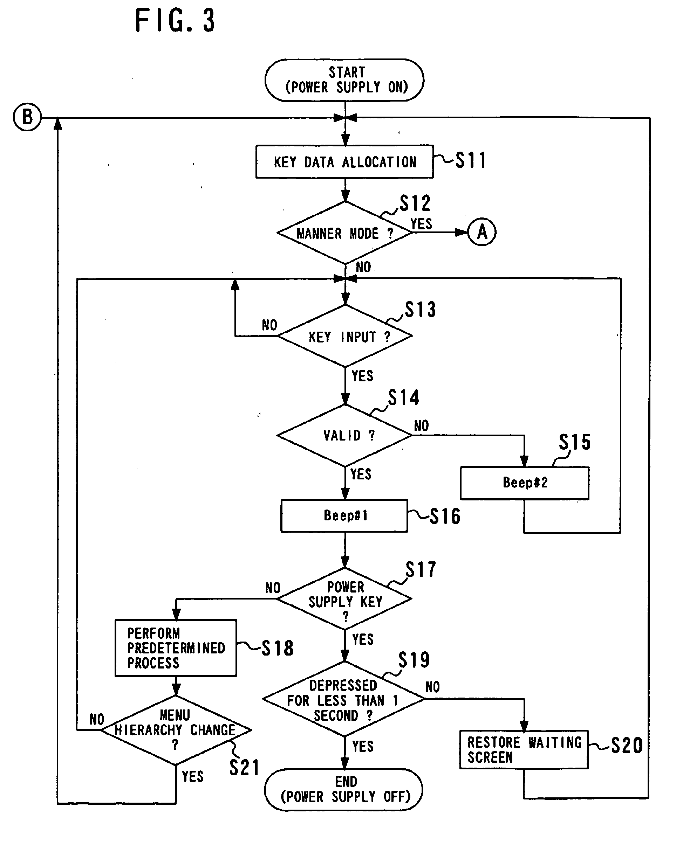

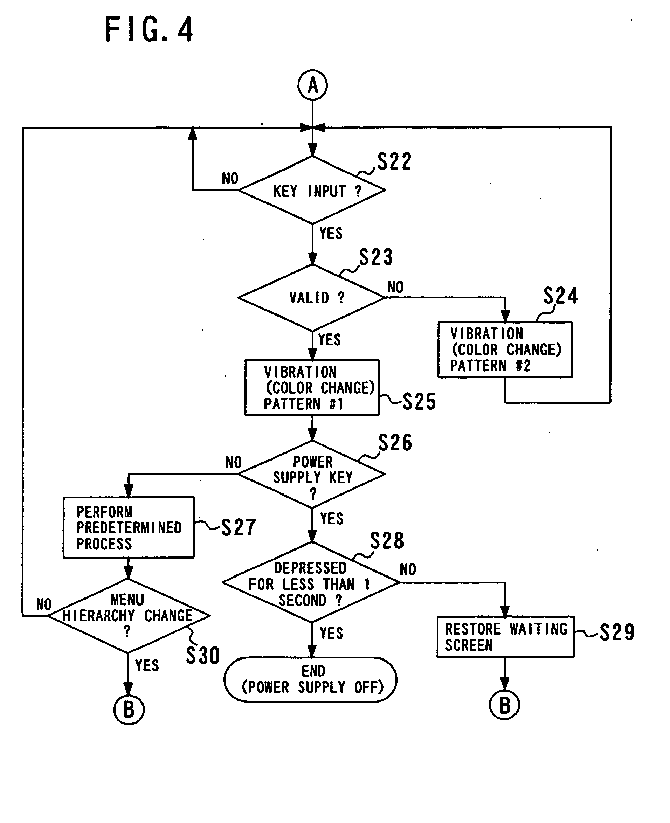

FIGS. 3 and 4 are flow charts illustrating different operation of the portable telephone set 1 described above with reference to FIG. 1. The process illustrated in FIGS. 3 and 4 is realized by the control section 15 executing the program of the memory 19 similarly.

Referring to FIGS. 1, 3 and 4, if the power supply to the portable telephone set 1 is turned on, then allocation of the keys of an initial menu (waiting screen) is performed automatically (step S11 of FIG. 3), and it is discriminated whether or not the portable telephone set 1 currently is in a state wherein it does not output a sound signal (a state wherein the terminal itself is used in a soundless fashion, that is, a manner mode) (step S12 of FIG. 3). If the portable telephone set 1 is not in the manner mode, then it performs operation similar to that of the operation described hereinabove with reference to FIG. 2 (steps S13 to S21 of FIG. 3).

On the other hand, if the portable telephone set 1 is in the manner mode, then when an input of a key on the key sheet 16 is detected (step S22 of FIG. 4), the control section 15 refers to the key allocation information 191 to discriminate whether the key is valid or invalid (step S23 of FIG. 4).

If the inputted key is valid, then the control section 15 controls the vibrator 18 to generate vibration in a first vibration pattern #1 or controls at least one of the LCD backlight 141 and the key backlight 161 to emit light in a first color change pattern #1 of blinking (step S25 of FIG. 4). Then, if the key is not the power supply key (step S25 of FIG. 4) , then the control section 15 performs a predetermined process (step S27 of FIG. 4). Then, if the hierarchy of the menu changes as a result of the process (step S30 of FIG. 4) , then the control section 15 returns the processing to step S11, at which it updates the key allocation information 191.

On the other hand, if the inputted key is the power supply key (step S26 of FIG. 4) , then the control section 15 performs a different operation depending upon the period of time for which the key is depressed. If the period for which the key is depressed is within 1 second (step S28 of FIG. 4) , then the control section 15 restores the waiting screen (step S29 of FIG. 4) and the processing returns to step S11, but if the period of time for which the key is depressed is equal to or longer than 1 second (step S28 of FIG. 4), then the control section 15 turns off the power supply and ends the processing.

On the other hand, if the inputted key is invalid (step S23 of FIG. 4) , then the control section 15 controls the vibrator 18 to generate vibration in the second vibration pattern #2 different from the first vibration pattern #1 or controls at least one of the LCD backlight 141 and key backlight 161 to emit light in the second color variation pattern #2 of blinking different from the first color variation pattern #1 (step S24 of FIG. 4). Then, the control section 15 waits until a valid key operation is inputted.

In this manner, according to the operation illustrated in FIGS. 3 and 4, if an inputted key when the portable telephone set 1 is in any other mode than the manner mode is valid, then the first beep sound (BEEP#1) is emitted, but if the inputted key is invalid, then the second beep sound (BEEP#2) is emitted. On the other hand, if the key inputted when the portable telephone set 1 is in the manner mode is valid, then at least one of the first vibration pattern #1 and the first color variation pattern #1 is used to generate vibration or emit light, but if the inputted key is invalid, then at least one of the second vibration pattern #2 and the second color variation pattern #2 is used to generate vibration or emit light. Consequently, the user can discriminate readily whether the inputted key is valid or invalid. Therefore, the portable telephone set can prevent the user from performing a wrong key operation repetitively.

In this instance, since some of the vibrator 18, LCD backlight 141, key backlight 161 and so forth provided on the portable telephone set 1 is used as a key operation validity/invalidity notification element, there is no necessity to use special hardware for the notification of validity/invalidity.

It is to be noted that, while, in the operation described above with reference to FIGS. 3 and 4, a key touch tone by the speaker 17 is used as a method of notifying the user of the validity of a key input in any other mode than the manner mode, the validity of a key input can otherwise be indicated by vibration by the vibrator 18, color change by blinking of the LCD backlight 141 or the key backlight 161 or a suitable combination of them.

Where the pattern of vibration by the vibrator 18 is used for the discrimination of whether a key operation is valid or invalid, it is effective to use the vibrator 18 when the user uses the portable telephone set in the manner mode so that the key touch tone may not be sounded or when the environment is noisy and the key touch tone cannot be noticed readily.

Further, in the operation described above with reference to FIGS. 3 and 4, it is also possible to visually notify the user of the validity of a key operation. As one of such methods, the LCD backlight 141 and/or the key backlight 161 are blinked to change the color. While such key operation validity/invalidity notification elements as the speaker 17, vibrator 18, LCD backlight 141 and key backlight 161 are usually used for notification of termination of a call and so forth, they can be customized in accordance with the taste of the user.

While a preferred embodiment of the present invention has been described using specific terms, such description is for illustrative purposes only, and it is to be understood that changes and variations may be made without departing from the scope of the following claims.

## Claims

1. A portable telephone set which includes call termination notification means (17, 18, 14, 141, 161) for notifying a user of said portable telephone set (1) of termination of a telephone call, and key inputting means (16) including a plurality of keys for accepting a key inputting operation of any of said keys by the user, **characterized in that** said portable telephone set (1) comprises:
a memory (19) for storing allocation information (191) of individual ones of said keys which is updated in accordance with a menu (192);
key input discrimination means (15) for discriminating whether the key inputting operation of any of said keys is valid or invalid based on the allocation information (191) stored in said memory (19),
key input validity notification means (15) operable when said key input discrimination means (15) discriminates that the key inputting operation is valid for causing said call termination notification means (17, 18, 14, 141, 161) to notify the user of the validity of the key inputting operation with a first pattern set in advance; and
key input invalidity notification means (15) operable when said key input discrimination means (15) discriminates that the key inputting operation is invalid for causing said call termination notification means (17, 18, 14, 141, 161) to notify the user of the invalidity of the key inputting operation with a second pattern set in advance and different from the first pattern,
wherein, when the portable telephone set is in a manner mode (speaker switched-off) if the key input discrimination means (15) discriminates that the key inputting operation is valid, then at least one of a first vibration pattern and a first color variation pattern is generated, whereas when the inputted key is invalid, then at least one of a second vibration pattern and a second color variation pattern is generated.

2. A portable telephone set as set forth in claim 1, **characterized in that** said call termination notification means (17, 18, 14, 141, 161) includes at least one of a speaker (17), a vibrator (18), a liquid crystal display device (14), a liquid crystal display backlight (141) and a key backlight (161).

3. A portable telephone set as set forth in claim 2, **characterized in that** at least one of said vibrator (18), liquid crystal display device (14), liquid crystal display backlight (141) and key backlight (161) of said call termination notification means (17, 18, 14, 141, 161) is rendered operative when said portable telephone set (1) is used in a mode wherein no sound is generated from said portable telephone set (1).

4. A key operation validity/invalidity notification method for a portable telephone set (1) which includes call termination notification means (17, 18, 14, 141, 161) for notifying a user of said portable telephone set (1) of termination of a telephone call and key inputting means (16) including a plurality of keys for accepting a key inputting operation of any of said keys by the user, **characterized in that** the key operation validity/invalidity notification method comprises:
a step of storing allocation information (191) of individual ones of said keys which is updated in accordance with a menue (192) into a memory (19);
a key input discrimination step (S3, S14, S23) of discriminating, when a key inputting operation of any of said keys is performed, whether the key inputting operation is valid or invalid; based on the allocation information (191) stored in said memory (19); and
a key input validity/invalidity notification step (S4, S5, S15, S16, S24, S25) of causing, when it is discriminated that the key inputting operation is valid, said call termination notification means (17, 18, 14, 141, 161) to notify the user of the validity of the key inputting operation with a first pattern set in advance but causing, when it is discriminated that the key inputting operation is invalid, said call termination notification means (17, 18, 14, 141, 161) to notify the user of the invalidity of the key inputting operation with a second pattern set in advance and different from the first pattern,
wherein, when the portable telephone set is in a manner mode (speaker switched-off) if the key input discrimination means (15) discriminates that the key inputting operation is valid, then at least one of a first vibration pattern and a first color variation pattern is generated, whereas when the inputted key is invalid, then at least one of a second vibration pattern and a second color variation pattern is generated.

5. A key operation validity/invalidity notification method as set forth in claim 4, **characterized in that** said call termination notification means (17,18,14,141,161) includes at least one of a speaker (17), a vibrator (18), a liquid crystal display device (14), a liquid crystal display backlight (141) and a key backlight (161).

6. A key operation validity/invalidity notification method as set forth in claim 5, **characterized in that** at least one of said vibrator (18), liquid crystal display device (14), liquid crystal display backlight (141) and key backlight (161) of said call termination notification means (17, 18, 14, 141, 161) is rendered operative when said portable telephone set (1) is used in a mode wherein no sound is generated from said portable telephone set (1).

7. A program for a portable telephone set (1) which includes call termination notification means (17, 18, 14, 141, 161) for notifying a user of said portable telephone set (1) of termination of a telephone call and key inputting means (16) including a plurality of keys for accepting a key inputting operation of any of said keys by the user, **characterized in that** said program causes a computer to execute:
a process of storing allocation information (191) of individual ones of said keys which is updated in accordance with a menue (192) into a memory (19);
a process (S3, S14, S23) of discriminating, when a key inputting operation of any of said keys is performed whether the key inputting operation is valid or invalid based on the allocation information (191) stored in said memory (19); and
a process (S5, S16, S25) of causing, when it is discriminated that the key inputting operation is valid, said call termination notification means (17, 18, 14, 141, 161) to notify the user of the validity of the key inputting operation with a first pattern set in advance; but (S4, S15, S24) causing, when it is discriminated that the key inputting operation is invalid, said call termination notification means (17, 18, 14, 141, 161) to notify the user of the invalidity of the key inputting operation with a second pattern set in advance and different from the first pattern,
wherein, when the portable telephone set is in a manner mode (speaker switched-off) if the key input discrimination means (15) discriminates that the key inputting operation is valid, then at least one of a first vibration pattern and a first color variation pattern is generated, whereas when the inputted key is invalid, then at least one of a second vibration pattern and a second color variation pattern is generated.

## Patentansprüche

1. Tragbares Telefon, das eine Anrufbeendigungsmeldungseinrichtung (17, 18, 14, 141, 161) aufweist, um einem Benutzer des tragbaren Telefons (1) das Ende eines Telefonanrufes zu melden, und mit Tasteneingabemitteln (16), die eine Anzahl von Tasten zum Annehmen einer Tasteneingabeoperation von einer dieser Tasten durch den Nutzer enthalten, ***dadurch gekennzeichnet,* dass** das tragbare Telefon (1) aufweist:
einen Speicher (19) zum Speichern von Zuordnungsinformation (191) von einzelnen Tasten, die in Übereinstimmung mit einem Menü (192) aktualisiert ist;
Tasteneingabeunterscheidungsmittel (15), um auf der Grundlage der Zuordnungsinformation (191), welche in diesem Speicher (19) gespeichert ist, zu unterscheiden, ob die Tasteneingabe irgendeiner der Tasten gültig oder ungültig ist,
Tasteneingabegültigkeitsmeldemittel (15), die betätigbar sind, wenn die Tasteneingabeunterscheidungsmittel (15) unterscheiden, dass die Tasteneingabeoperation gültig ist, um zu bewirken, dass die Anrufbeendigungsmeldemittel (17, 18, 14, 141, 161) dem Benutzer die Gültigkeit der Tasteneingabeoperation mit einem ersten im Voraus geschetzten Muster, melden; und
Tasteneingabeungültigkeitsmeldemittel (15), die betätigbar sind, wenn die Tasteneingabeunterscheidungsmittel (15) unterscheiden, dass die Tasteneingabeoperation ungültig ist, um zu bewirken, dass die Anrufbeendigungsmeldemittel (17, 18, 14, 141, 161) dem Benutzer die Ungültigkeit der Tasteneingabeoperation mit einem zweiten Muster melden, dass im Voraus geschetzt worden ist, und sich von dem ersten Muster unterscheidet,
wobei wenn das tragbare Telefon in einem Betriebsmodus (Lautsprecher abgeschaltet) gesetzt ist, wenn die Tasteneingabeunterscheidungsmittel (15) unterscheiden, dass die Tasteneingabeoperation gültig ist, dann wenigstens ein Muster, ein erstes Vibrationsmuster oder ein erstes Farbänderungsmuster erzeugt wird, während wenn die eingegebene Taste ungültig ist, dann wenigstens ein Muster, ein zweites Vibrationsmuster oder ein zweites Farbänderungsmuster erzeugt wird.

2. Tragbares Telefon nach Anspruch 1, ***dadurch gekennzeichnet,* dass** die Anrufbeendigungsmeldemittel (17, 18, 14, 141, 161) wenigstens einen Lautsprecher (17), einen Vibrator (18) eine Flüssigkristallanzeigevorrichtung (14), ein Flüssigkristallanzeigehintergrundlicht (141) oder ein Tastenhintergrundlicht (161) aufweisen.

3. Tragbares Telefon nach Anspruch 2, ***dadurch gekennzeichnet,* dass** wenigstens der Vibrator (18), die Flüssigkristallanzeigevorrichtung (14), das Flüssigkristallanzeigehintergrundlicht (141) und/oder das Tastenhintergrundlicht (161) der Anrufbeendigungsmeldemittel (17, 18, 14, 141, 161) in Betrieb gesetzt wird, wenn das tragbare Telefon (1) in einem Modus verwendet wird, bei dem vom tragbaren Telefon (1) kein Ton erzeugt wird.

4. Tastenbetätigungs-Gültigkeits/Ungültigkeits-Meldeverfahren für ein tragbares Telefon (1), das Anrufbeendigungsmeldemittel (17, 18, 14, 141, 161) aufweist, um einem Benutzer des tragbaren Telefons (1) das Ende eines Telefonanrufes zu melden, und Tasteneingabemittel (16) mit einer Anzahl von Tasten zum Annehmen einer Tasteneingabeoperation von einer der Tasten durch den Benutzer enthält, ***dadurch gekennzeichnet,* dass** das Tastenbetätigungs-Gültigkeits/Ungültigkeits-Meldeverfahren aufweist:
einen Schritt zum Speichern von Zuordnungsinformation (191) von Einzelnen der Tasten, die in Übereinstimmung mit einem Menü (192) aktualisiert ist, in einem Speicher (19);
einen Tasteneingabeunterscheidungsschritt (S3, S14, S23) zum Unterscheiden, wenn eine Tasteneingabeoperation einer der Tasten durchgeführt worden ist, ob die Tasteneingabeoperation gültig oder ungültig ist; auf der Grundlage von Zuordnungsinformation (191), die in dem Speicher (19) gespeichert ist; und
einen Kasteneingabe-Gültigkeits/Ungültigkeits-Meldeschritt (S4, S5, S15, S16, S24, S25), der bewirkt, wenn entschieden worden ist, dass die Tasteneingabeoperation gültig ist, die Anrufbeendigungsmeldemittel (17, 18, 14, 141, 161) dem Benutzer die Gültigkeit der Tasteneingabeoperation mit einem ersten Muster, das im Voraus gesetzt worden ist, melden, aber bewirken, dass wenn entschieden worden ist, dass die Tasteneingabeoperation ungültig ist, die Anrufbeendigungsmeldemittel (17, 18, 14, 141, 161) dem Benutzer die Ungültigkeit der Tasteneingabeoperation mit einem zweiten Muster melden, das im Voraus gesetzt worden ist und das sich vom ersten Muster unterscheidet,
wobei, wenn das tragbare Telefon in einem Betriebsmodus ist (Lautsprecher abgeschaltet), wenn die Tasteneingabeunterscheidungsmittel (15) unterscheiden, dass die Tasteneingabeoperation gültig ist, dann wenigstens ein erstes Vibrationsmuster oder ein erstes Farbänderungsmuster erzeugt wird, während wenn die eingegebene Taste ungültig ist, dann wenigstens ein zweites Vibrationsmuster oder ein zweites Farbänderungsmuster erzeugt wird.

5. Tastenbetätigungs-Gültigkeit/Ungültigkeits-Meldeverfahren nach Anspruch 4, ***dadurch gekennzeichnet,* dass** die Anrufbeendigungsmeldemittel (17, 18, 14, 141, 161) wenigstens einen Lautsprecher (17), einen Vibrator (18), eine Flüssigkristallanzeigevorrichtung (14), ein Flüssigkristallanzeigehintergrundlicht (141) oder ein Tastenhintergrundlicht (161) aufweisen.

6. Tastenbetätigungs-Gültigkeits/Ungültigkeits-Meldeverfahren nach Anspruch 5, ***dadurch gekennzeichnet,* dass** wenigstens der Vibrator (18), die Flüssigkristallanzeigevorrichtung (14), das Flüssigkristallanzeigehintergrundlicht (141) und/oder das Tastenhintergrundlicht (161) der Anrufbeendigungsmeldemittel (17, 18, 14, 141, 161) in Betrieb gesetzt werden, wenn das tragbare Telefon (1) in einem Modus verwendet wird, bei dem von dem tragbaren Telefon (1) kein Ton erzeugt wird.

7. Program für ein tragbares Telefon (1), dass Anrufbeendigungsmeldemittel (17, 18, 14, 141, 161) aufweist, um einem Benutzer des tragbaren Telefons (1) das Ende eines Telefonanrufes zu melden, und Tasteneingabemittel (16) mit einer Anzahl von Tasten zum Annehmen einer Tasteneingabeoperation von einer der Tasten durch den Benutzer aufweist, ***dadurch gekennzeichnet,* dass** das Program bewirkt, dass ein Computer durchführt:
einen Prozess zum Speichern von Zuordnungsinformation (191) von Einzelnen der Tasten, die in Übereinstimmung mit einem Menü (192) aktuallisiert wird, in einem Speicher (19);
einen Prozess (S3, S14, S23) zum Unterscheiden, ob eine Tasteneingabeoperation gültig oder ungültig ist, wenn eine Tasteneingabeoperation einer der Tasten durchgeführt worden ist, auf der Grundlage der Zuordnungsinformation (191), die in dem Speicher (19) eingespeichert ist; und
einen Prozess (S5, S16, S25), der bewirkt, dass wenn entschieden worden ist, dass die Tasteneingabeoperation gültig ist, die Anrufbeendigungsmeldemittel (17, 18, 14, 141, 161) dem Benutzer die Gültigkeit der Tasteneingabeoperation mit einem ersten Muster, das im Voraus gesetzt worden ist, melden; aber (S4, S15, S24) bewirken, dass wenn unterschieden worden ist, dass die Tasteneingabeoperation ungültig ist, die Anrufbeendigungsmeldemittel (17, 18, 14, 141, 161) dem Benutzer die Ungültigkeit der Tasteneingabeoperation mit einem zweiten Muster melden, dass im Vorraus gesetzt worden ist, und sich von dem ersten Muster unterscheidet,
wobei, wenn das tragbare Telefon in einem Betriebsmodus (Lautsprecher ausgeschaltet) ist, wenn die Tasteneingabe Unterscheidungsmittel (15) unterscheiden, dass die Tasteneingabeoperation gültig ist, dann wenigstens ein erstes Vibrationsmuster oder ein erstes Farbänderungsmuster erzeugt wird, während wenn die eingegebene Taste ungültig ist, dann wenigstens ein zweites Vibrationsmuster oder ein zweites Farbänderungsmuster erzeugt wird.

## Revendications

1. Téléphone portatif qui comprend des moyens de notification de fin d'appel (17, 18, 14, 141, 161) pour notifier à un utilisateur dudit téléphone portatif (1) la fin d'un appel téléphonique, et des moyens d'actionnement de touche (16) comprenant une pluralité de touches pour accepter une opération d'actionnement de touche de l'une quelconque desdites touches par l'utilisateur, **caractérisé en ce que** ledit téléphone portatif (1) comprend :
une mémoire (19) pour stocker des informations d'allocation (191) de touches individuelles parmi lesdites touches qui sont mises à jour en fonction d'un menu (192) ;
des moyens de discernement d'actionnement de touche (15) pour discerner si l'opération d'actionnement de touche de l'une quelconque desdites touches est valide ou invalide sur la base des informations d'allocation (191) stockées dans ladite mémoire (19),
des moyens de notification de validité d'actionnement de touche (15) utilisables lorsque lesdits moyens de discernement d'actionnement de touche (15) discernent que l'opération d'actionnement de touche est valide pour amener lesdits moyens de notification de fin d'appel (17, 18, 14, 141, 161) à notifier à l'utilisateur la validité de l'opération d'actionnement de touche avec un premier motif réglé à l'avance ; et
des moyens de notification d'invalidité d'actionnement de touche (15) utilisables lorsque lesdits moyens de discernement d'actionnement de touche (15) discernent que l'opération d'actionnement de touche est invalide pour amener lesdits moyens de notification de fin d'appel (17, 18, 14, 141, 161) à notifier à l'utilisateur l'invalidité de l'opération d'actionnement de touche avec un deuxième motif réglé à l'avance et différent du premier motif,
dans lequel, lorsque le téléphone portatif est dans un mode de politesse (haut-parleur arrêté), si les moyens de discernement d'actionnement de touche (15) discernent que l'opération d'actionnement de touche est valide, alors au moins l'un d'un premier motif de vibrations et d'un premier motif de variations de couleurs est généré, tandis que lorsque la touche actionnée est invalide, alors au moins l'un d'un deuxième motif de vibrations et d'un deuxième motif de variations de couleurs est généré.

2. Téléphone portatif selon la revendication 1, **caractérisé en ce que** lesdits moyens de notification de fin d'appel (17, 18, 14, 141, 161) comprennent au moins l'un d'un haut-parleur (17), d'un vibrateur (18), d'un dispositif d'affichage à cristaux liquides (14), d'un rétroéclairage d'affichage à cristaux liquides (141) et d'un rétroéclairage de touche (161).

3. Téléphone portatif selon la revendication 2, **caractérisé en ce qu'**au moins l'un dudit vibrateur (18), dudit dispositif d'affichage à cristaux liquides (14), dudit rétroéclairage d'affichage à cristaux liquides (141) et dudit rétroéclairage de touche (161) desdits moyens de notification de fin d'appel (17, 18, 14, 141, 161) est rendu opérationnel lorsque ledit téléphone portatif (1) est utilisé dans un mode dans lequel aucun son n'est généré dudit téléphone portatif (1).

4. Procédé de notification de validité/invalidité d'actionnement de touche pour un téléphone portatif (1) qui comprend des moyens de notification de fin d'appel (17, 18, 14, 141, 161) pour notifier à un utilisateur dudit téléphone portatif (1) la fin d'un appel téléphonique et des moyens d'actionnement de touche (16) comprenant une pluralité de touches pour accepter une opération d'actionnement de touche de l'une quelconque desdites touches par l'utilisateur, **caractérisé en ce que** ledit procédé de notification de validité/invalidité d'actionnement de touche comprend :
une étape consistant à stocker des informations d'allocation (191) de touches individuelles parmi lesdites touches qui sont mises à jour en fonction d'un menu (192) dans une mémoire (19) ;
une étape de discernement d'actionnement de touche (S3, S14, S23) pour discerner, lorsqu'une opération d'actionnement de touche de l'une quelconque desdites touches est effectuée, si l'opération d'actionnement de touche est valide ou invalide sur la base des informations d'allocation (191) stockées dans ladite mémoire (19) ; et
une étape de notification de validité/invalidité d'actionnement de touche (S4, S5, S15, S16, S24, S25) consistant à amener, lorsqu'il est discerné que l'opération d'actionnement de touche est valide, lesdits moyens de notification de fin d'appel (17, 18, 14, 141, 161) à notifier à l'utilisateur la validité de l'opération d'actionnement de touche avec un premier motif réglé à l'avance, mais à amener, lorsqu'il est discerné que l'opération d'actionnement de touche est invalide, lesdits moyens de notification de fin d'appel (17, 18, 14, 141, 161) à notifier à l'utilisateur l'invalidité de l'opération d'actionnement de touche avec un deuxième motif réglé à l'avance et différent du premier motif,
dans lequel, lorsque le téléphone portatif est dans un mode de politesse (haut-parleur arrêté), si les moyens de discernement d'actionnement de touche (15) discernent que l'opération d'actionnement de touche est valide, alors au moins l'un d'un premier motif de vibrations et d'un premier motif de variations de couleurs est généré, tandis que lorsque la touche actionnée est invalide, alors au moins l'un d'un deuxième motif de vibrations et d'un deuxième motif de variations de couleurs est généré.

5. Procédé de notification de validité/invalidité d'actionnement de touche selon la revendication 4, **caractérisé en ce que** lesdits moyens de notification de fin d'appel (17, 18, 14, 141, 161) comprennent au moins l'un d'un haut-parleur (17), d'un vibrateur (18), d'un dispositif d'affichage à cristaux liquides (14), d'un rétroéclairage d'affichage à cristaux liquides (141) et d'un rétroéclairage de touche (161).

6. Procédé de notification de validité/invalidité d'actionnement de touche selon la revendication 5, **caractérisé en ce qu'**au moins l'un dudit vibrateur (18), dudit dispositif d'affichage à cristaux liquides (14), dudit rétroéclairage d'affichage à cristaux liquides (141) et dudit rétroéclairage de touche (161) desdits moyens de notification de fin d'appel (17, 18, 14, 141, 161) est rendu opérationnel lorsque ledit téléphone portatif (1) est utilisé dans un mode dans lequel aucun son n'est généré dudit téléphone portatif (1) .

7. Programme pour un téléphone portatif (1) qui comprend des moyens de notification de fin d'appel (17, 18, 14, 141, 161) pour notifier à un utilisateur dudit téléphone portatif (1) la fin d'un appel téléphonique et des moyens d'actionnement de touche (16) comprenant une pluralité de touches pour accepter une opération d'actionnement de touche de l'une quelconque desdites touches par l'utilisateur, **caractérisé en ce que** ledit programme amène un ordinateur à exécuter :
un processus consistant à stocker des informations d'allocation (191) de touches individuelles parmi lesdites touches qui sont mises à jour en fonction d'un menu (192) dans une mémoire (19) ;
un processus (S3, S14, S23) de discernement, lorsqu'une opération d'actionnement de touche de l'une quelconque desdites touches est effectuée, si l'opération d'actionnement de touche est valide ou invalide sur la base des informations d'allocation (191) stockées dans ladite mémoire (19) ; et
un processus (S5, S16, S25) consistant à amener, lorsqu'il est discerné que l'opération d'actionnement de touche est valide, lesdits moyens de notification de fin d'appel (17, 18, 14, 141, 161) à notifier à l'utilisateur la validité de l'opération d'actionnement de touche avec un premier motif réglé à l'avance, mais (S4, S15, S24) à amener, lorsqu'il est discerné que l'opération d'actionnement de touche est invalide, lesdits moyens de notification de fin d'appel (17, 18, 14, 141, 161) à notifier à l'utilisateur l'invalidité de l'opération d'actionnement de touche avec un deuxième motif réglé à l'avance et différent du premier motif,
dans lequel, lorsque le téléphone portatif est dans un mode de politesse (haut-parleur arrêté), si les moyens de discernement d'actionnement de touche (15) discernent que l'opération d'actionnement de touche est valide, alors au moins l'un d'un premier motif de vibrations et d'un premier motif de variations de couleurs est généré, tandis que lorsque la touche actionnée est invalide, alors au moins l'un d'un deuxième motif de vibrations et d'un deuxième motif de variations de couleurs est généré.
